# EUROPEAN PATENT APPLICATION

(11) **EP 4 089 758 A1**
(43) Date of publication of application: **16.11.2022**
(21) Application number: 21867903.3
(22) Date of filing: 31.03.2021
(51) Int. Cl.: H01M 4/13

(54) **NEGATIVE ELECTRODE PLATE, LITHIUM-METAL BATTERY COMPRISING NEGATIVE ELECTRODE PLATE, AND ELECTRONIC DEVICE**

(71) Applicant: Ningde Amperex Technology Ltd., Ningde City, Fujian 352100 (CN)
(72) Inventor: GUAN, Wenhao, Ningde Fujian 352100 (CN); CHEN, Maohua, Ningde Fujian 352100 (CN); XIE, Yuansen, Ningde Fujian 352100 (CN)
(74) Representative: Klunker IP Patentanwälte PartG mbB
(86) International application number: PCT/CN2021/084577
(87) International publication number: WO 2022/205135

(57) **Abstract**

This application provides a negative electrode plate, a lithium metal battery containing same, and an electronic device. The negative electrode plate includes a negative current collector and a piezoelectric layer. A polarization electric field exists on the piezoelectric layer. A direction of the polarization electric field is directed from the negative current collector to a surface of a negative electrode. A material of the piezoelectric layer includes at least one of a piezoelectric polymer, piezoelectric ceramic, piezoelectric monocrystal, or an inorganic piezoelectric material. The negative electrode plate can control lithium deposition sites, effectively suppress the growth of lithium dendrites, and significantly improve the cycle performance and safety performance of the lithium metal battery.

## Description

### TECHNICAL FIELD

This application relates to the technical field of lithium metal batteries, and in particular, to a negative electrode plate, a lithium metal battery containing same, and an electronic device.

### BACKGROUND

Among all metal elements, lithium metal is a metal with the smallest relative atomic mass (6.94) and the lowest standard electrode potential (-3.045 V). A theoretical gram capacity of the lithium metal is up to 3860 mAh/g. Therefore, by using the lithium metal as a negative electrode of the battery accompanied by some positive materials of a high energy density, the energy density of the battery and the working voltage of the battery can be greatly increased. However, if the battery that uses the lithium metal as a negative material is put into real commercial use, the cycle life and the safety issue need to be improved in the following three aspects. (1) During the charging of the lithium metal battery, lithium is deposited on a surface of a negative current collector. Due to a weak lithiophilic nature of the current collector, lithium ions are unable to be homogeneously and rapidly nucleated, resulting in inhomogeneous lithium ion concentration at an interface between a negative electrode and an electrolytic solution. Consequently, current density distribution at the interface is inhomogeneous, deposition speed at a nucleation site is too fast, and a dendrite structure is formed, thereby severely limiting efficiency, cycle life, and energy density of the lithium metal battery. (2) At an interface between a lithium metal negative electrode and an electrolytic solution, an exerted electric field interacts with a lithium-ion flow to form uneven liquid electro-convection perpendicular to a surface of the negative electrode. Consequently, deposition speed of lithium metal in a direction perpendicular to the current collector is faster than deposition speed in a direction parallel to the current collector, thereby being an important factor for forming a lithium dendrite structure. (3) In a liquid-state electrolyte system, consumption speed of the lithium ions is far less than the mass transfer speed in the electrolytic solution. Consequently, the lithium ions are piled up on the dendrite surface to form a huge space charge layer and a huge deposition barrier, thereby hindering the deposition of the lithium ions at a root of the dendrite and making the lithium dendrite sharper. The sharp lithium dendrite may pierce a separator and directly contact a positive electrode to form a short circuit to cause serious safety problems.

In view of the foregoing problems, it is urgent to find a method that can improve the lithiophilic nature of the negative current collector, homogenize the current density distribution at the interface between the negative electrode and the electrolytic solution, and suppress the generation of the space charge layer on the surface of the deposited lithium, so as to suppress the growth of the lithium dendrite and improve cycle performance and safety performance of the lithium metal battery.

### SUMMARY

An objective of this application is to provide a negative electrode plate, a lithium metal battery containing same, and an electronic device to improve cycle performance and safety performance of the lithium metal battery.

A first aspect of this application provides a negative electrode plate, including a negative current collector and a piezoelectric layer. A polarization electric field exists on the piezoelectric layer. A direction of the polarization electric field is directed from the negative current collector to a surface of a negative electrode. A material of the piezoelectric layer includes at least one of a piezoelectric polymer, piezoelectric ceramic, piezoelectric monocrystal, or an inorganic piezoelectric material.

In this application, the piezoelectric layer is polarized so that the direction of the polarization electric field is directed from the negative current collector to the surface of the negative electrode. An orderly polarization electric field is built inside the piezoelectric layer subjected to directional polarization. From a macroscopic perspective, the orderly polarization electric field makes the surface of the negative electrode negatively charged, thereby increasing deposition sites of lithium metal, reducing a lithium deposition overpotential, and making the distribution of lithium nuclei more homogeneous. From a microscopic perspective, newly deposited lithium metal during charging give rise to deformation of the piezoelectric layer. Lithium metal deposition generates a piezoelectric effect while giving rise to strain, reduces the polarization strength of the piezoelectric layer material, increases the potential at a deposition site, and induces subsequent lithium ions to be deposited at an undeposited site first, thereby forming planar growth, improving lithium deposition morphology, and suppressing lithium dendrites. In this application, the term "strain" means relative deformation in a local region of an object under the action of factors such as an external force or an inhomogeneous temperature field. In this application, "deposition overpotential" means an overpotential required for providing thermodynamic energy for the nucleation and deposition of lithium metal.

In this application, the material of the piezoelectric layer includes at least one of a piezoelectric polymer, piezoelectric ceramic, piezoelectric monocrystal, or an inorganic piezoelectric material. The piezoelectric layer that generates a piezoelectric effect is prepared by selecting the foregoing material, so that a polarization electric field exists inside the piezoelectric layer. Therefore, the lithium metal is induced to deposit in an orderly manner by using the direction of the electric field, thereby preventing the generation of lithium dendrites. The material of the piezoelectric layer may be an elastic material. The elastic material of the piezoelectric layer can buffer the volume change of the lithium metal negative electrode to some extent, so as to protect the negative electrode. Preferably, the material of the piezoelectric layer includes any one of a piezoelectric polymer, piezoelectric ceramic, piezoelectric monocrystal, or an inorganic piezoelectric material. Therefore, the material of the piezoelectric layer is consistent, and the electric field distribution inside the piezoelectric layer is more homogeneous. In this way, the lithium deposition is more homogeneous, and the growth of lithium dendrites is suppressed more effectively. In this application, the term "piezoelectric effect" means that when a dielectric is deformed by an external force received in a specific direction, polarization occurs inside the dielectric, and opposite charges, positive and negative, appear on two opposite surfaces of the dielectric.

Overall, the negative electrode plate according to this application includes a negative current collector and a piezoelectric layer. A polarization electric field exists on the piezoelectric layer. A direction of the polarization electric field is directed from the negative current collector to a surface of a negative electrode. A material of the piezoelectric layer includes at least one of a piezoelectric polymer, piezoelectric ceramic, piezoelectric monocrystal, or an inorganic piezoelectric material. The negative electrode plate can increase lithium metal deposition sites, improve the deposition morphology, effectively suppress the growth of lithium dendrites, greatly improve the cycle performance of the lithium metal battery, and can avoid the generation of sharp lithium dendrites that pierce the separator and that directly contact the positive electrode to form a short circuit, thereby improving the safety performance of the lithium metal battery.

In some embodiments of the first aspect of this application, a room-temperature coercive field strength Ec of the material of the piezoelectric layer satisfies: 0 kV/mm < Ec < 100 kV/mm. For example, a lower limit of the room-temperature coercive field strength Ec may be, but is not limited to, 1 kV/mm, 10 kV/mm, 20 kV/mm, 30 kV/mm, or 40 kV/mm; and an upper limit of the room-temperature coercive field strength Ec may be, but is not limited to, 50 kV/mm, 60 kV/mm, 70 kV/mm, 80 kV/mm, 90 kV/mm, or 99 kV/mm. Without being limited to any theory, if the room-temperature coercive field strength Ec of the material of the piezoelectric layer is too high (for example, higher than 100 kV/mm), the requirements on the piezoelectric material are too high, few materials are available, the polarization voltage of the material is high, the difficulty of implementation is high, and the material does not further improve the battery performance significantly, and is not practically applicable. In this application, the term "room-temperature coercive field strength" means an electric field strength that makes the polarization disappear under a room temperature when the material is in the electric field.

In some embodiments of the first aspect of this application, a person skilled in the art understands that, the strength of the polarization electric field is selected depending on the room-temperature coercive field strength Ec of the material of the piezoelectric layer. The strength of the polarization electric field is preferably 0.1 to 6 times the room-temperature coercive field strength Ec. For example, a lower limit of the strength of the polarization electric field may be, but is not limited to, 0.1, 1, 2, 2.9, or 3 times the room-temperature coercive field strength Ec; and an upper limit of the strength of the polarization electric field may be, but is not limited to, 4, 5, or 6 times the room-temperature coercive field strength Ec. Without being limited to any theory, if the strength of the polarization electric field is too low (for example, lower than 0.1 times the room-temperature coercive field strength Ec), a polarization electric field is unable to be generated inside the piezoelectric layer. If the strength of the polarization electric field is too high (for example, higher than 6 times the room-temperature coercive field strength Ec), the material of the piezoelectric layer will break down and the piezoelectric layer will fail. With the strength of the polarization electric field controlled to be within the foregoing range, an orderly polarization electric field in a specific direction can be formed inside the piezoelectric layer. Therefore, the surface of the negative electrode is negatively charged, and the negative electrode is more lithiophilic. The potential at the deposition site is enhanced by using the piezoelectric effect of the piezoelectric layer, and lithium ions are induced to deposit at an undeposited site, thereby improving the lithium deposition morphology and suppressing the growth of lithium dendrites.

In some embodiments of the first aspect of this application, the type of the piezoelectric polymer is not particularly limited, as long as the objectives of this application can be achieved. For example, the piezoelectric polymer may include polyvinylidene difluoride (PVDF), a vinylidene difluoride-trifluoroethylene copolymer, a vinylidene difluoride-tetrafluoroethylene copolymer, a vinylidene dicyanide-vinyl acetate copolymer (P(VDCN-VAC)), a vinylidene dicyanide-vinyl benzoate copolymer (P(VDCN-VBz)), a vinylidene dicyanide-vinyl propionate copolymer (P(VDCN-VPr)), a vinylidene dicyanide-vinyl pivalate copolymer (P(VDCN-VPiv)), a vinylidene dicyanide-methyl methacrylate copolymer (P(VDCN-MMA)), a vinylidene dicyanide-isobutylene copolymer (P(VDCN-IB)), or a nylon-odd number piezoelectric polymer -(HN-(CH₂)ₓ-CO-)ₙ-, where x is an even number within 2 to 10, and n is an integer within 90 to 400. When n is greater than 400, a molecular weight of -(HN-(CH₂)ₓ-CO-)ₙ- is too large, thereby increasing the processing difficulty drastically. In this application, a weight-average molecular weight of the piezoelectric polymer is not particularly limited, and may be selected by a person skilled in the art depending on the actual situation, as long as the objectives of this application can be achieved.

In some embodiments of the first aspect of this application, the type of the piezoelectric ceramic is not particularly limited, as long as the objectives of this application can be achieved. For example, the piezoelectric ceramic includes at least one of barium titanate (BaTiO₃), lead titanate (PbTiO₃), lithium niobate (LiNbO₃), lithium tantalate (LiNbO₃), lead zirconate titanate PbZr_{y}Ti_{1-y}O₃, lead magnesium niobate PbMg_{z}Nb_{1-z}O₃, lead zinc niobate PbZnᵥNb₁₋ᵥO₃, or lead manganese antimonate PbMn_{w}Sb_{1-w}O₃ or Pb₁₋ₛMₘ(ZrₜTi₁₋ₜ)_{1-(s/4)}O₃ or the like, where 0 < y < 1, 0 < z < 1, 0 < v < 1, 0 < w < 1, 0 < s < 1, 0 < m < 1, 0 < t < 1, and M is any one of rare earth elements, and the rare earth elements include Y, La, Ce, Nd, Sm, Eu, Gd, or Dy, and the like.

In some embodiments of the first aspect of this application, the type of the piezoelectric monocrystal is not particularly limited, as long as the objectives of this application can be achieved. For example, the piezoelectric monocrystal may include quartz monocrystal, tellurium oxide crystal, bismuth germanate monocrystal (Bi₁₂GeO₂₀), lithium iodate monocrystal (LiIO₃), aluminum orthophosphate monocrystal (AlPO₄), lanthanum gallium silicate monocrystal (La₃Ga₅SiO₁₄), barium titanate monocrystal (BaTiO₃), or lead zirconate titanate monocrystal PbZrₑTi₁₋ₑO₃, or the like, where 0 < e < 1.

In some embodiments of the first aspect of this application, the type of the inorganic piezoelectric material is not particularly limited, as long as the objectives of this application can be achieved. For example, the inorganic piezoelectric material may include at least one of metal oxide, nitride, carbide, or an intermetallic compound. Specifically, the inorganic piezoelectric material may include at least one of metal oxide, nitride, carbide, or an intermetallic compound, which, in each case, possesses a piezoelectric nature. For example, the metal oxide may include zinc oxide, bismuth oxide, cobalt oxide, lead oxide, nickel oxide, chromium oxide, antimony oxide, or the like. The nitride may include aluminum nitride (AlN), aluminum gallium nitride (AlGaN), indium aluminum nitride (InAIN), gallium nitride (GaN), indium gallium nitride (InGaN), or indium nitride (InN), or the like. The carbide includes silicon carbide (SiC) or the like. The intermetallic compound includes a trititanium aluminum-based (Ti₃Al) or titanium-aluminum-based (TiAl) intermetallic compound or the like.

In some embodiments of the first aspect of this application, the piezoelectric layer includes a powder piezoelectric layer. A thickness of the powder piezoelectric layer is 0.1 µm to 5 µm. For example, a lower limit of the thickness of the powder piezoelectric layer may be, but is not limited to, 0.1 µm, 0.2 µm, 0.5 µm, 1 µm, or 2 µm. An upper limit of the thickness of the powder piezoelectric layer may be, but is not limited to, 3 µm, 4 µm, 4.5 µm, 4.8 µm, or 5 µm. The inventor finds that when the thickness of the powder piezoelectric layer is too small, the powder piezoelectric layer is too thin, the powder piezoelectric layer is not strong enough and is prone to rupture, and the safety performance of the lithium metal battery is affected. When the thickness of the powder piezoelectric layer is too large, the energy density of the lithium metal battery is reduced. In this application, the thickness of the powder piezoelectric layer is controlled to be within the foregoing range, thereby improving the cycle performance and safety performance of the lithium metal battery.

In some embodiments of the first aspect of this application, the powder piezoelectric layer is formed of a powder piezoelectric material and a conductive material, a mass percent of the powder piezoelectric material is 50% to 100%, and a mass percent of the conductive material is 0% to 50%. The piezoelectric materials in this application are mostly electronic insulators, and are not conducive to homogeneous dispersion of the current on the surface of the current collector. Therefore, it is necessary to control the ratio of the piezoelectric material to the conductive material. In this application, the mass percent of the powder piezoelectric material to the conductive material in the powder piezoelectric layer is controlled to be within the foregoing range, thereby dispersing lithium ions and electrons concurrently and achieving the purpose of suppressing the growth of lithium dendrites.

In some embodiments of the first aspect of this application, the powder piezoelectric material includes at least one of powder of the piezoelectric polymer, powder of the piezoelectric ceramic, or powder of the piezoelectric monocrystal. The conductive material includes at least one of conductive carbon powder or conductive metal powder. In this application, the type of the conductive material is not limited as long as the objectives of this application can be achieved. For example, the conductive material may include at least one of acetylene black (AB), conductive carbon black (Super P), or Ketjen black.

In other embodiments of the first aspect of this application, the piezoelectric layer includes a thin film piezoelectric layer. A thickness of the thin film piezoelectric layer is 5 µm to 200 µm, and preferably, 50 µm to 100 µm. For example, a lower limit of the thickness of the thin film piezoelectric layer may be, but is not limited to, 5 µm, 10 µm, 20 µm, 50 µm, or 100 µm. An upper limit of the thickness of the thin film piezoelectric layer may be, but is not limited to, 110 µm, 130 µm, 150 µm, 180 µm, or 200 µm. The inventor finds that when the thickness of the thin film piezoelectric layer is too small, the thin film piezoelectric layer is too thin, the thin film piezoelectric layer is not strong enough and is prone to rupture, and the safety performance of the lithium metal battery is affected. When the thickness of the thin film piezoelectric layer is too large, the energy density of the lithium metal battery is reduced. In this application, the thickness of the thin film piezoelectric layer is controlled to be within the foregoing range, thereby improving the cycle performance and safety performance of the lithium metal battery. The thin film piezoelectric layer of a thickness falling within the foregoing preferred range is more effective in improving the cycle performance and safety performance of the lithium metal battery.

In other embodiments of the first aspect of this application, the thin film piezoelectric layer includes a thin film piezoelectric material. The thin film piezoelectric material includes at least one of a piezoelectric polymer film, a piezoelectric ceramic film, a piezoelectric monocrystal film, or an inorganic piezoelectric material film. The inorganic piezoelectric material film may further include a thin film or a monocrystal sheet made of the foregoing piezoelectric ceramic, or the like.

In this application, the type of the piezoelectric layer in the lithium metal battery is not particularly limited. A person skilled in the art may select a powder piezoelectric layer or a thin film piezoelectric layer depending on the actual situation, as long as the objectives of this application can be achieved.

The preparation of the powder piezoelectric layer is not particularly limited in this application. In an embodiment, for example, the PVDF powder and acetylene black may be dispersed in N-methyl-pyrrolidone (NMP), and then the surface of the negative current collector is coated with the NMP by using a doctor blade. The negative current collector is dried in a vacuum oven at 75 °C to 85 °C to obtain a negative electrode plate. The negative electrode plate includes a powder piezoelectric layer located on the surface of the negative current collector.

The preparation of the thin film piezoelectric layer is not particularly limited in this application. In an embodiment, for example, the PVDF powder is put into a mixed solvent of 160 mL to 200 mL of anhydrous ethanol and 110 mL to 130 mL of NMP, and is stirred at 65 °C to 75 °C for 1.5 to 2.5 hours, and then placed in an ultrasonic cleaner. A vacuum pump is connected to the ultrasonic cleaner to ultrasonically pump air for 8 to 12 minutes. Under 65 °C to 75 °C, the mixed solvent is thermally insulated for 15 to 25 minutes to obtain a transparent and homogeneous solution. The solution is led into a tape-casting machine equipped with polyester film tape, and a PVDF film is prepared by tape-casting. The width of a slit of the doctor blade is adjusted, and the prepared PVDF film is stripped off the polyester film tape to obtain a thin film piezoelectric layer.

In some embodiments of the first aspect of this application, the piezoelectric layer is located on a surface of the negative current collector; or located between the negative current collector and a negative material layer, or located on an outer surface of the negative material layer; or the piezoelectric layer is mixed with the negative material layer and located on the surface of the negative current collector.

The negative electrode plate in this application may include a negative material layer or not. This may be understood as: when the negative electrode plate does not include a negative material layer, the piezoelectric layer is located on the surface of the negative current collector, and the piezoelectric layer can evenly overlay the surface of the negative current collector. The negative current collector overlaid with the piezoelectric layer is directly used as the negative electrode plate. When the negative electrode plate in this application includes a negative material layer, the piezoelectric layer may evenly overlay the surface of the negative current collector, and may be located between the negative current collector and the negative material layer. Alternatively, the piezoelectric layer may evenly overlay the outer surface of the negative material layer, and may be located on the outer surface of the negative material layer, and located between the negative electrode and the electrolytic solution. Alternatively, the piezoelectric layer may be evenly mixed with the negative material layer, and then evenly overlay the surface of the negative current collector, and may be located on the surface of the negative current collector.

The negative electrode plate in this application includes a negative current collector and a piezoelectric layer. In this application, the negative current collector is not particularly limited as long as the objectives of this application can be achieved. For example, the negative current collector includes a copper foil, a copper alloy foil, a nickel foil, a stainless steel foil, a titanium foil, foamed nickel, foamed copper, or a composite current collector, or the like. When the negative electrode plate in this application further includes a negative material layer, the negative material layer may include lithium metal or a composite material containing lithium metal. In this application, the negative electrode plate may further include a conductive layer. The conductive layer is located between the negative current collector and the negative material layer. The composition of the conductive layer is not particularly limited, and may be a conductive layer commonly used in the art. The conductive layer includes a conductive agent and a binder. In this application, the conductive agent and the binder are not particularly limited as long as the objectives of this application can be achieved. When the negative electrode plate in this application includes a conductive layer, the piezoelectric layer may evenly overlay the surface of the negative current collector, and may be located between the negative current collector and the conductive layer. Alternatively, the piezoelectric layer may be located between the conductive layer and the negative material layer. Alternatively, the piezoelectric layer may evenly overlay the outer surface of the negative material layer, and may be located on the outer surface of the negative material layer, and located between the negative electrode and the electrolytic solution. Alternatively, the piezoelectric layer may be evenly mixed with the negative material layer, and then evenly overlay the surface of the negative current collector, and may be located on the surface of the negative current collector.

A second aspect of this application provides a lithium metal battery. The lithium metal battery includes the negative electrode plate according to the first aspect of this application.

The negative electrode plate in the lithium metal battery according to this application is the negative electrode plate according to this application. Other components such as a positive electrode plate, a separator, and an electrolytic solution are not particularly limited as long as the objectives of this application can be achieved.

The positive electrode plate in this application is not particularly limited as long as the objectives of this application can be achieved. For example, the positive electrode plate generally includes a positive current collector and a positive material layer. In this application, the positive current collector is not particularly limited as long as the objectives of this application can be achieved. For example, the positive current collector may include an aluminum foil, an aluminum alloy foil, a composite current collector, or the like. The positive material layer includes a positive active material. The positive active material is not particularly limited as long as the objectives of this application can be achieved. For example, the positive active material may include at least one of lithium nickel cobalt manganese oxide (811, 622, 523, 111), lithium nickel cobalt aluminum oxide, lithium iron phosphate, a lithium-rich manganese-based material, lithium cobaltate, lithium manganate, lithium manganese iron phosphate, or lithium titanate. In this application, the thicknesses of the positive current collector and the positive material layer are not particularly limited as long as the objectives of this application can be achieved. For example, the thickness of the positive current collector is 5 µm to 20 µm, and preferably, 6 µm to 18 µm, and more preferably, 8 µm to 16 µm. The thickness of the positive material layer is 30 µm to 120 µm. Optionally, the positive electrode plate may further include a conductive layer. The conductive layer is located between the positive current collector and the positive material layer. The composition of the conductive layer is not particularly limited, and may be a conductive layer commonly used in the art. The conductive layer includes a conductive agent and a binder.

The conductive agent is not particularly limited as long as the objectives of this application can be achieved. For example, the conductive agent may include at least one of conductive carbon black (Super P), carbon nanotubes (CNTs), carbon nanofibers, flake graphite, acetylene black, carbon black, Ketjen black, carbon dots, carbon nanotubes, or graphene, or the like. The binder is not particularly limited, and may be any binder well known in the art, as long as the objectives of this application can be achieved. For example, the binder may include at least one of polypropylene alcohol, sodium polyacrylate, potassium polyacrylate, lithium polyacrylate, polyimide, polyamide imide, styrene butadiene rubber (SBR), polyvinyl alcohol (PVA), polyvinylidene fluoride, polyvinylidene difluoride (PVDF), polytetrafluoroethylene (PTFE), polyvinyl butyral (PVB), water-based acrylic resin, carboxymethyl cellulose (CMC), or sodium carboxymethyl cellulose (CMC-Na), or the like.

The separator in this application is not particularly limited as long as the objectives of this application can be achieved. For example, the separator may be at least one of: a polyethylene (PE)- and polypropylene (PP)-based polyolefin (PO) separator, a polyester film (such as polyethylene terephthalate (PET) film), a cellulose film, a polyimide film (PI), a polyamide film (PA), a spandex or aramid film, a woven film, a non-woven film (non-woven fabric), a microporous film, a composite film, separator paper, a laminated film, or a spinning film. For example, the separator may include a substrate layer and a surface treatment layer. The substrate layer may be a non-woven fabric, film or composite film, which, in each case, is porous. The material of the substrate layer may include at least one of polyethylene, polypropylene, polyethylene terephthalate, polyimide, or the like. Optionally, the substrate layer may be a polypropylene porous film, a polyethylene porous film, a polypropylene non-woven fabric, a polyethylene non-woven fabric, or a polypropylene-polyethylene-polypropylene porous composite film. Optionally, a surface treatment layer is disposed on at least one surface of the substrate layer. The surface treatment layer may be a polymer layer or an inorganic compound layer, or a layer formed by mixing a polymer and an inorganic compound. For example, the inorganic compound layer includes inorganic particles and a binder. The inorganic particles are not particularly limited, and may be at least one selected from: aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, barium sulfate, or the like. The binder is not particularly limited, and may be one or more selected from polyvinylidene fluoride, vinylidene fluoride-hexafluoropropylene copolymer, polyamide, polyacrylonitrile, polyacrylate, polyacrylic acid, polyacrylic acid sodium salt, polyvinylpyrrolidone, polyvinyl ether, poly methyl methacrylate, polytetrafluoroethylene, or polyhexafluoropropylene. The polymer layer includes a polymer, and the material of the polymer includes at least one of polyamide, polyacrylonitrile, acrylate polymer, polyacrylic acid, polyacrylate, polyvinylpyrrolidone, polyvinyl ether, polyvinylidene fluoride, poly(vinylidene fluoride-hexafluoropropylene), or the like.

The lithium metal battery according to this application further includes an electrolyte. The electrolyte may be at least one of a gel electrolyte, a solid-state electrolyte, and an electrolytic solution. The electrolytic solution includes a lithium salt and a nonaqueous solvent. In some embodiments of this application, the lithium salt may include at least one of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiSiF₆, LiBOB, LiTFSI, or lithium difluoroborate. For example, the lithium salt may be LiTFSI because it provides a high ionic conductivity and improves cycle characteristics. The nonaqueous solvent may be at least one of a carbonate compound, a carboxylate compound, an ether compound, or another organic solvent. The carbonate compound may be a chain carbonate compound, a cyclic carbonate compound, a fluorocarbonate compound, or any combination thereof. Examples of the chain carbonate compound are dimethyl carbonate (DMC), diethyl carbonate (DEC), dipropyl carbonate (DPC), methyl propyl carbonate (MPC), ethylene propyl carbonate (EPC), ethyl methyl carbonate (EMC), or any combinations thereof. Examples of the cyclic carbonate compound are ethylene carbonate (EC), propylene carbonate (PC), butylene carbonate (BC), vinyl ethylene carbonate (VEC), or any combination thereof. Examples of the fluorocarbonate compound are fluoroethylene carbonate (FEC), 1, 2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, trifluoromethyl ethylene carbonate, or any combinations thereof. Examples of the carboxylate compound are methyl formate, methyl acetate, ethyl acetate, n-propyl acetate, tert-butyl acetate, methyl propionate, ethyl propionate, propyl propionate, γ-butyrolactone, decanolactone, valerolactone, mevalonolactone, caprolactone, or any combinations thereof. Examples of the ether compound are dibutyl ether, tetraglyme, diglyme, 1,2-dimethoxyethane, 1,2-diethoxyethane, ethoxy-methoxyethane, 2-methyltetrahydrofuran, tetrahydrofuran, or any combination thereof. Examples of the other organic solvent are at least one of dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, or phosphate ester.

The preparation process of the lithium metal battery is well known to a person skilled in the art, and is not particularly limited in this application. For example, the manufacturing process may be: properly stacking the positive electrode and the negative electrode that are separated by the separator, and then fixing four corners of the entire laminate structure by using adhesive tape, and then placing the laminate structure into an aluminum plastic film; and performing top-and-side sealing, electrolyte injection, and sealing to ultimately obtain a laminated lithium metal battery. The negative electrode in use is the negative electrode plate according to this application.

A third aspect of this application provides an electronic device. The electronic device includes the lithium metal battery according to the second aspect of this application.

The electronic device according to this application is not particularly limited, and may be any electronic device known in the prior art. In some embodiments, the electronic device may include, but is not limited to, a notebook computer, a pen-inputting computer, a mobile computer, an e-book player, a portable phone, a portable fax machine, a portable photocopier, a portable printer, a stereo headset, a video recorder, a liquid crystal display television set, a handheld cleaner, a portable CD player, a mini CD-ROM, a transceiver, an electronic notepad, a calculator, a memory card, a portable voice recorder, a radio, a backup power supply, a motor, a car, a motorcycle, a power-assisted bicycle, a bicycle, a lighting appliance, a toy, a game machine, a watch, an electric tool, a flashlight, a camera, a large household storage battery, and the like.

This application provides a negative electrode plate, a lithium metal battery containing same, and an electronic device. The negative electrode plate includes a negative current collector and a piezoelectric layer. A polarization electric field exists on the piezoelectric layer. A direction of the polarization electric field is directed from the negative current collector to a surface of a negative electrode. A material of the piezoelectric layer includes at least one of a piezoelectric polymer, piezoelectric ceramic, piezoelectric monocrystal, or an inorganic piezoelectric material. The negative electrode plate can control lithium deposition sites, effectively suppress the growth of lithium dendrites, and significantly improve the cycle performance and safety performance of the lithium metal battery.

### DETAILED DESCRIPTION OF EMBODIMENTS

To make the objectives, technical solutions, and advantages of this application clearer, the following describes this application in more detail with reference to embodiments. Evidently, the described embodiments are merely a part of but not all of the embodiments of this application. All other embodiments derived by a person of ordinary skill in the art based on the embodiments of this application fall within the protection scope of this application.

### Embodiment

The implementations of this application are described below in more detail with reference to embodiments and comparative embodiments. Various tests and evaluations are performed in accordance with the following methods.

### Test methods and devices:

### Testing a deposition overpotential:

Assembling a lithium metal battery in which the positive electrode is lithium metal with a piezoelectric layer or a current collector with a piezoelectric layer, the negative electrode is pure lithium metal, and the separator and the electrolytic solution are the same as those in a battery intended for cycling. Discharging the lithium metal battery at a constant current at a current density of 0.3 mA/cm² under 25 °C, and recording a curve of time-varying voltage, where an absolute value difference between a peak voltage and a steady voltage is a lithium metal deposition overpotential.

### Testing cycle performance:

Performing chemical formation on a lithium metal battery for one cycle at a charge rate and a discharge rate of 0.1 C under a temperature of 25 °C, and then charging the battery at a constant current of 0.3 C under a temperature of 25 °C until the voltage reaches 4.3 V, and charging the battery at a constant voltage until the current reaches 0.05 C. Leaving the battery to stand for 5 minutes, and then discharging the battery at a current of 1 C until the voltage reaches 2.8 V. Using the capacity obtained in this step as an initial capacity, performing a cycle test in which the battery is charged at 0.3 C and discharged at 1 C, comparing the capacity obtained in each step with the initial capacity to obtain ratios, and obtaining a capacity attenuation curve based on the ratios. When the capacity retention rate reaches 80% in the cycle test under 25 °C, recording the number of cycles as the room-temperature cycle performance of the lithium metal battery.

### Embodiment 1

### <Preparing a negative electrode plate>

Dispersing PVDF powder and acetylene black (AB) at a mass ratio of 95:5 in NMP, blending the mixture into a slurry with a solid content of 12%, mixing the PVDF and the AB evenly by stirring, coating a surface of a 10 µm-thick negative current collector copper foil with the slurry by using a doctor blade, and drying the negative current collector in a vacuum oven at 80 °C to obtain a negative electrode plate with a 3 µm-thick powder piezoelectric layer.

Placing the prepared negative electrode plate in a parallel electric field to undergo air polarization, where the strength of the polarization electric field is 10 kV/mm, the polarization time is 30 minutes, the piezoelectric layer faces a negative voltage side, and the negative current collector faces a positive voltage side. After completion of the polarization, cutting the negative electrode plate into a size of 40 mm × 60 mm for future use. The room-temperature coercive field strength Ec of the PVDF is 50 kV/mm.

### <Preparing a positive electrode plate>

Mixing lithium iron phosphate (LiFePO₄) as a positive active material, conductive carbon black (Super P) as a conductive agent, and PVDF as a binder at a mass ratio of 97.5: 1.0: 1.5, adding N-methyl-pyrrolidone (NMP) as a solvent, blending the mixture into a slurry with a solid content of 75%, and stirring the slurry evenly. Coating a 10 µm-thick positive current collector aluminum foil with the slurry evenly, and drying the slurry at a temperature of 90 °C to obtain a positive electrode plate coated with a positive active material layer on a single side, where the thickness of the positive active material layer is 100 µm. After completion of the coating, cutting the positive electrode plate into a size of 38 mm × 58 mm for future use.

### <Preparing an electrolytic solution>

Mixing dioxolane (DOL) and dimethyl ether (DME) at a volume ratio of DOL:DME = 1:1 in a dry argon atmosphere to obtain a mixed solvent, adding lithium bis(trifluoromethanesulfonyl)imide (LiTFSI) serving as a lithium salt into the mixed solvent, and letting the lithium salt be dissolved and mixed evenly to obtain an electrolytic solution in which a lithium salt concentration is 1 mol/L.

### <Preparing a lithium metal battery>

Using a 15 µm-thick polyethylene (PE) as a separator, placing the prepared negative electrode plate in the middle, placing one single-side-coated positive electrode plate as an upper layer and another as a lower layer, and placing a separator between each positive electrode plate and the negative electrode plate. After proper lamination, fixing four corners of the entire laminate structure by using adhesive tape, and then placing the laminate structure into an aluminum plastic film; and performing top-and-side sealing, electrolyte injection, and sealing to ultimately obtain a laminated lithium metal battery.

### Embodiments 2-8

The steps of <Preparing a negative electrode plate>, <Preparing a positive electrode plate>, <Preparing an electrolytic solution>, and <Preparing a lithium metal battery> are the same as those described in Embodiment 1, and the changes in the relevant preparation parameters are shown in Table 1.

### Embodiment 9

### <Preparing a negative electrode plate>

Putting 80 grams of PVDF powder into a round-bottom flask containing a mixed solvent of 180 mL of anhydrous ethanol and 120 mL of NMP, and stirring at 70 ° C for 2 hours. Then placing the mixed solvent into an ultrasonic cleaner, connecting a vacuum pump to the ultrasonic cleaner to ultrasonically pump air for 10 minutes, and thermally insulating the mixed solvent under 70 °C for 20 minutes to obtain a transparent and homogeneous solution. Leading the solution into a tape-casting machine equipped with polyester film tape, and preparing a PVDF film by tape-casting. Adjusting the width of a slit of the doctor blade, and stripping the prepared PVDF film of 10 µm in thickness from the polyester film tape.

Placing the PVDF film in a parallel electric field to undergo air polarization, where the strength of the polarization electric field is 10 kV/mm, the polarization time is 30 minutes, and the direction of the polarization electric field is constant. After completion of the air polarization, affixing an end that is of the polarized PVDF film and that interiorly carries a positive charge to the negative current collector copper foil side, so as to obtain a negative electrode plate with a 10 µm-thick thin film piezoelectric layer. Cutting the negative electrode plate into a size of 40 mm × 60 mm for future use.

<Preparing a positive electrode plate>, <Preparing an electrolytic solution>, and <Preparing a lithium metal battery> are the same as those described in Embodiment 1.

### Embodiments 10-15

The steps of <Preparing a negative electrode plate>, <Preparing a positive electrode plate>, <Preparing an electrolytic solution>, and <Preparing a lithium metal battery> are the same as those described in Embodiment 9, and the changes in the relevant preparation parameters are shown in Table 1.

### Embodiment 16

### <Preparing a negative electrode plate>

Dispersing PVDF powder and acetylene black (AB) at a mass ratio of 95:5 in NMP, blending the mixture into a slurry with a solid content of 12%, mixing the PVDF and the AB evenly by stirring, coating the outer surface of the lithium metal of the negative material layer with the slurry by using a doctor blade, and drying the negative material layer in a vacuum oven at 80 °C for future use, so as to obtain a negative electrode plate with a 3 µm-thick powder piezoelectric layer.

Placing the negative electrode plate in a parallel electric field to undergo air polarization, where the strength of the polarization electric field is 50 kV/mm, the polarization time is 30 minutes, and the piezoelectric layer faces a negative voltage side. After completion of the polarization, cutting the negative electrode plate into a size of 40 mm × 60 mm for future use.

<Preparing a positive electrode plate>, <Preparing an electrolytic solution>, and <Preparing a lithium metal battery> are the same as those described in Embodiment 1.

### Embodiment 17

### <Preparing a negative electrode plate>

Dispersing PVDF powder and acetylene black (AB) at a mass ratio of 95:5 in NMP, blending the mixture into a slurry with a solid content of 12%, mixing the PVDF and the AB evenly by stirring, coating the surface of the negative current collector copper foil with the slurry by using a doctor blade, and drying the negative current collector in a vacuum oven at 80 °C for future use, so as to obtain a modified current collector with a 3 µm-thick powder piezoelectric layer. Then, rolling the lithium metal of the negative material layer over the modified current collector under a pressure of 8 tons by using a roller press machine, so as to obtain a negative electrode plate.

Placing the negative electrode plate in a parallel electric field to undergo air polarization, where the strength of the polarization electric field is 50 kV/mm, the polarization time is 30 minutes, and the piezoelectric layer faces a negative voltage side. After completion of the polarization, cutting the negative electrode plate into a size of 40 mm × 60 mm for future use.

<Preparing a positive electrode plate>, <Preparing an electrolytic solution>, and <Preparing a lithium metal battery> are the same as those described in Embodiment 1.

### Embodiment 18

### <Preparing a negative electrode plate>

Dispersing PVDF powder and acetylene black (AB) at a mass ratio of 95:5 in NMP, blending the mixture into a slurry with a solid content of 12%, mixing the PVDF and the AB evenly by stirring, coating the surface of the negative current collector copper foil with the slurry by using a doctor blade, and drying the negative current collector in a vacuum oven at 80 °C for future use, so as to obtain a modified current collector with a 3 µm-thick powder piezoelectric layer. Performing pre-replenishment of lithium electrochemically by using a 0.05 mm-thick lithium sheet as a lithium source. Selecting a 15 µm-thick PE separator, placing the modified current collector and the lithium metal on two sides of the separator respectively, with both the piezoelectric layer part and the lithium metal part facing the separator directly. In this way, a lithium replenishment battery is assembled for electrochemical replenishment of lithium, where the electrolytic solution is the same as the electrolytic solution described in <Preparing an electrolytic solution>, the lithium replenishment device is a LAND brand (model: CT2001A) of a 5 V and 5 mA specification, the lithium replenishment current is 0.2 mA/cm², the discharge duration is 15.5 hours, and the amount of lithium replenishment is 3.1 mAh/cm². After the pre-replenishment of lithium is completed, a negative electrode plate containing lithium metal is obtained.

Placing the negative electrode plate in a parallel electric field to undergo air polarization, where the strength of the polarization electric field is 50 kV/mm, the polarization time is 30 minutes, and the piezoelectric layer faces a negative voltage side. After completion of the polarization, cutting the negative electrode plate into a size of 40 mm × 60 mm for future use.

<Preparing a positive electrode plate>, <Preparing an electrolytic solution>, and <Preparing a lithium metal battery> are the same as those described in Embodiment 1.

Relevant preparation parameters in Embodiments 16-18 are shown in Table 1.

### Embodiment 19

### <Preparing a negative electrode plate>

Dispersing BaTiO₃ piezoelectric ceramic powder and conductive carbon black (SP) at a mass ratio of 95:5 in NMP, blending the mixture into a slurry with a solid content of 12%, mixing the BaTiO₃ and the SP evenly by stirring, coating the surface of the negative current collector copper foil with the slurry by using a doctor blade, and drying the negative current collector in a vacuum oven at 80 °C for future use, so as to obtain a negative electrode plate with a 3 µm-thick powder piezoelectric layer.

Placing the prepared negative electrode plate in a parallel electric field to undergo air polarization, where the strength of the polarization electric field is 0.1 kV/mm, the polarization time is 30 minutes, and the piezoelectric layer faces a negative voltage side. After completion of the polarization, cutting the negative electrode plate into a size of 40 mm × 60 mm for future use.

<Preparing a positive electrode plate>, <Preparing an electrolytic solution>, and <Preparing a lithium metal battery> are the same as those described in Embodiment 1.

### Embodiments 20-25

The steps of <Preparing a negative electrode plate>, <Preparing a positive electrode plate>, <Preparing an electrolytic solution>, and <Preparing a lithium metal battery> are the same as those described in Embodiment 19, and the changes in the relevant preparation parameters are shown in Table 1.

### Embodiment 26

### <Preparing a negative electrode plate>

Placing PbO, ZrO₂, and TiO₂ at a molar ratio of 5: 3: 2 into a high-energy planetary ball mill, adding 100 ml of ethanol as a ball-milling agent, and ball-milling at a speed of 250 r/min for 30 hours to obtain lead zirconate titanate PbZr_{0.6}Ti_{0.4}O₃ powder. Dispersing the PbZr_{0.6}Ti_{0.4}O₃ powder in NMP, stirring the NMP to disperse the PbZr_{0.6}Ti_{0.4}O₃ powder evenly to obtain a slurry with a solid content of 12%. Coating the surface of the negative current collector copper foil with the slurry by using a doctor blade, and drying the negative current collector in a vacuum oven at 80 °C for future use, so as to obtain a negative electrode plate with a 3 µm-thick powder piezoelectric layer.

Placing the prepared negative electrode plate in a parallel electric field to undergo air polarization, where the strength of the polarization electric field is 3 kV/mm, the polarization time is 30 minutes, and the piezoelectric layer faces a negative voltage side. After completion of the polarization, cutting the negative electrode plate into a size of 40 mm × 60 mm for future use.

<Preparing a positive electrode plate>, <Preparing an electrolytic solution>, and <Preparing a lithium metal battery> are the same as those described in Embodiment 1.

### Embodiment 27

### <Preparing a negative electrode plate>

Growing a BaTiO₃ monocrystal sheet by means of a cosolvent: mixing the BaTiO₃ powder, a cosolvent KF, and an oxygenating agent Fe₂O₃ evenly, putting the mixture into a platinum crucible, heating up to 1175 °C in a high-temperature furnace, thermally insulating for 8 hours, slowly cooling down to 875 °C, and then pouring out the molten KF, cooling the KF down to a room temperature at a speed of 10 °C per hour, and melting the remaining KF in the crucible by using hot water, thereby obtaining a BaTiO₃ monocrystal sheet.

Placing the BaTiO₃ monocrystal sheet in a parallel electric field to undergo air polarization, where the strength of the polarization electric field is 0.1 kV/mm, the polarization time is 30 minutes, and the direction of the polarization electric field is parallel to a thickness direction of the monocrystal sheet and remains constant. After completion of the air polarization, affixing a positively charged end of the polarized BaTiO₃ monocrystal sheet to the negative current collector copper foil side, so as to obtain a negative electrode plate with a 10 µm-thick thin film piezoelectric layer. Cutting the negative electrode plate into a size of 40 mm × 60 mm for future use.

<Preparing a positive electrode plate>, <Preparing an electrolytic solution>, and <Preparing a lithium metal battery> are the same as those described in Embodiment 1.

### Embodiments 28-33

The steps of <Preparing a negative electrode plate>, <Preparing a positive electrode plate>, <Preparing an electrolytic solution>, and <Preparing a lithium metal battery> are the same as those described in Embodiment 32, and the changes in the relevant preparation parameters are shown in Table 1.

### Embodiment 34

### <Preparing a negative electrode plate>

Placing a nylon-7 film of 10 µm in thickness (brand: Formosa Chemicals & Fibre Corporation; model: NP4000) into a parallel electric field to undergo air polarization, where the strength of the polarization electric field is 280 kV/mm, the polarization time is 30 minutes, and the direction of the polarization electric field is parallel to a thickness direction of the film and remains constant. After completion of the air polarization, affixing a positively charged end of the polarized nylon-7 film to the negative current collector copper foil side, so as to obtain a negative electrode plate with a 10 µm-thick thin film piezoelectric layer. Cutting the negative electrode plate into a size of 40 mm × 60 mm for future use.

<Preparing a positive electrode plate>, <Preparing an electrolytic solution>, and <Preparing a lithium metal battery> are the same as those described in Embodiment 1.

### Embodiment 35

### <Preparing a negative electrode plate>

Place a 10 µm-thick tellurium oxide monocrystal sheet (brand: Physcience Opto-electronics Co., Ltd., Beijing; model: TEO2) into a parallel electric field to undergo air polarization, where the strength of the polarization electric field is 3 kV/mm, the polarization time is 30 minutes, and the direction of the polarization electric field is parallel to a thickness direction of the monocrystal sheet and remains constant. After completion of the air polarization, affixing a positively charged end of the polarized tellurium oxide monocrystal sheet to the negative current collector copper foil side, so as to obtain a negative electrode plate with a 10 µm-thick thin film piezoelectric layer. Cutting the negative electrode plate into a size of 40 mm × 60 mm for future use.

<Preparing a positive electrode plate>, <Preparing an electrolytic solution>, and <Preparing a lithium metal battery> are the same as those described in Embodiment 1.

### Comparative Embodiment 1

The negative electrode plate is a negative current collector copper foil. The steps of <Preparing a positive electrode plate>, <Preparing an electrolytic solution>, and <Preparing a lithium metal battery> are the same as those described in Embodiment 1.

### Comparative Embodiments 2~5

The steps of <Preparing a negative electrode plate>, <Preparing a positive electrode plate>, <Preparing an electrolytic solution>, and <Preparing a lithium metal battery> are the same as those described in Embodiment 1.

### Comparative Embodiments 6~7

The steps of <Preparing a negative electrode plate>, <Preparing a positive electrode plate>, <Preparing an electrolytic solution>, and <Preparing a lithium metal battery> are the same as those described in Embodiment 9.

### Comparative Embodiments 8~9

The steps of <Preparing a negative electrode plate>, <Preparing a positive electrode plate>, <Preparing an electrolytic solution>, and <Preparing a lithium metal battery> are the same as those described in Embodiment 19.

### Comparative Embodiments 10~11

The steps of <Preparing a negative electrode plate>, <Preparing a positive electrode plate>, <Preparing an electrolytic solution>, and <Preparing a lithium metal battery> are the same as those described in Embodiment 32.

### Comparative Embodiment 12

The negative electrode plate is lithium metal. The steps of <Preparing a positive electrode plate>, <Preparing an electrolytic solution>, and <Preparing a lithium metal battery> are the same as those described in Embodiment 1.

The changes in the relevant preparation parameters in each of the foregoing comparative embodiments are shown in Table 1.

Table 1 shows performance parameters of a lithium metal battery assembled with the negative electrode plate prepared in each embodiment and comparative embodiment.

**Table 1**

| | Piezoelectr ic material | Room-temperature coercive field strength Ec of material (kV/mm) | Strength of polarizat ion electric field (kV/mm ) | Conducti ve material | Mass ratio of piezoelectr ic material to conductive material | Thickness of piezoelectr ic layer (µm) | Type of piezoelectr ic layer | Location of piezoelectr ic layer | Quantit y of cycles | Deposition overpotent ial (0.3 mA/cm²)/ mV |
|---|---|---|---|---|---|---|---|---|---|---|
| Embodimen t 1 | PVDF | 50 | 10 | AB | 95:5 | 3 | Powder piezoelectr ic layer | Surface of negative current collector | 28 | 17 |
| Embodimen t2 | PVDF | 50 | 50 | AB | 95:5 | 3 | Powder piezoelectr ic layer | Surface of negative current collector | 46 | 8 |
| Embodimen t 3 | PVDF | 50 | 100 | AB | 95:5 | 3 | Powder piezoelectr ic layer | Surface of negative current collector | 45 | 6 |
| Embodimen t4 | PVDF | 50 | 200 | AB | 95:5 | 3 | Powder piezoelectr ic layer | Surface of negative current collector | 45 | 7 |
| Embodimen t 5 | PVDF | 50 | 50 | AB | 95:5 | 0.1 | Powder piezoelectr ic layer | Surface of negative current collector | 42 | 8 |
| Embodimen t 6 | PVDF | 50 | 50 | AB | 95:5 | 1 | Powder piezoelectr ic layer | Surface of negative current collector | 45 | 10 |
| Embodimen t 7 | PVDF | 50 | 50 | AB | 95:5 | 5 | Powder piezoelectr ic layer | Surface of negative current collector | 40 | 16 |
| Embodimen t 8 | PVDF | 50 | 50 | AB | 50:50 | 3 | Powder piezoelectr ic layer | Surface of negative current collector | 30 | 12 |
| Embodimen t 9 | PVDF | 50 | 10 | / | / | 10 | Thin film piezoelectr ic layer | Surface of negative current collector | 30 | 18 |
| Embodimen t 10 | PVDF | 50 | 50 | / | / | 10 | Thin film piezoelectr ic layer | Surface of negative current collector | 40 | 10 |
| Embodimen t 11 | PVDF | 50 | 100 | / | / | 10 | Thin film piezoelectr ic layer | Surface of negative current collector | 42 | 9 |
| Embodimen t 12 | PVDF | 50 | 200 | / | / | 10 | Thin film piezoelectr ic layer | Surface of negative current collector | 38 | 12 |
| Embodimen t13 | PVDF | 50 | 50 | / | / | 5 | Thin film piezoelectr ic layer | Surface of negative current collector | 39 | 8 |
| Embodimen t 14 | PVDF | 50 | 50 | / | / | 50 | Thin film piezoelectr ic layer | Surface of negative current collector | 36 | 16 |
| Embodimen t 15 | PVDF | 50 | 50 | / | / | 200 | Thin film piezoelectr ic layer | Surface of negative current collector | 31 | 18 |
| Embodimen t 16 | PVDF | 50 | 50 | AB | 95:5 | 3 | Powder piezoelectr ic layer | Outer surface of negative material layer | 117 | / |
| Embodimen t 17 | PVDF | 50 | 50 | AB | 95:5 | 3 | Powder piezoelectr ic layer | between negative current collector and negative material layer | 126 | / |
| Embodimen t 18 | PVDF | 50 | 50 | AB | 95:5 | 3 | Powder piezoelectr ic layer | The piezoelectr ic layer is mixed with the negative material layer and located on the surface of the negative current collector | 121 | / |
| Embodimen t 19 | BaTiO₃ | 1 | 0.1 | SP | 95:5 | 3 | Powder piezoelectr ic layer | Surface of negative current collector | 32 | 16 |
| Embodimen t 20 | BaTiO₃ | 1 | 1 | SP | 95:5 | 3 | Powder piezoelectr ic layer | Surface of negative current collector | 56 | 9 |
| Embodimen t21 | BaTiO₃ | 1 | 3 | SP | 95:5 | 3 | Powder piezoelectr ic layer | Surface of negative current collector | 62 | 6 |
| Embodimen t 22 | BaTiO₃ | 1 | 5 | SP | 95:5 | 3 | Powder piezoelectr ic layer | Surface of negative current collector | 60 | 8 |
| Embodimen t 23 | BaTiO₃ | 1 | 3 | SP | 95:5 | 0.1 | Powder piezoelectr ic layer | Surface of negative current collector | 58 | 9 |
| Embodimen t 24 | BaTiO₃ | 1 | 3 | SP | 95:5 | 1 | Powder piezoelectr ic layer | Surface of negative current collector | 60 | 8 |
| Embodimen t 25 | BaTiO₃ | 1 | 3 | SP | 95:5 | 5 | Powder piezoelectr ic layer | Surface of negative current collector | 53 | 15 |
| Embodimen t 26 | Lead zirconate titanate PbZr_{0.6}Ti_{0.4} O₃ | 0.7 | 3 | SP | 95:5 | 3 | Powder piezoelectr ic layer | Surface of negative current collector | 57 | 9 |
| Embodimen t 27 | BaTiO₃ monocryst al sheet | 1 | 0.1 | / | / | 10 | Thin film piezoelectr ic layer | Surface of negative current collector | 35 | 14 |
| Embodimen t 28 | BaTiO₃ monocryst al sheet | 1 | 1 | / | / | 10 | Thin film piezoelectr ic layer | Surface of negative current collector | 48 | 12 |
| Embodimen t 29 | BaTiO₃ monocryst al sheet | 1 | 3 | / | / | 10 | Thin film piezoelectr ic layer | Surface of negative current collector | 52 | 9 |
| Embodimen t 30 | BaTiO₃ monocryst al sheet | 1 | 5 | / | / | 10 | Thin film piezoelectr ic layer | Surface of negative current collector | 50 | 9 |
| Embodimen t 31 | BaTiO₃ monocryst al sheet | 1 | 3 | / | / | 5 | Thin film piezoelectr ic layer | Surface of negative current collector | 45 | 10 |
| Embodimen t 32 | BaTiO₃ monocryst al sheet | 1 | 3 | / | / | 50 | Thin film piezoelectr ic layer | Surface of negative current collector | 41 | 13 |
| Embodimen t 33 | BaTiO₃ monocryst al sheet | 1 | 3 | / | / | 200 | Thin film piezoelectr ic layer | Surface of negative current collector | 38 | 15 |
| Embodimen t 34 | Nylon-7 | 97 | 280 | / | / | 10 | Thin film piezoelectr ic layer | Surface of negative current collector | 52 | 15 |
| Embodimen t 35 | Tellurium oxide crystal | 1.2 | 3 | / | / | 10 | Thin film piezoelectr ic layer | Surface of negative current collector | 48 | 11 |
| Comparativ e Embodimen t 1 | / | / | / | / | / | / | / | / | 16 | 17 |
| Comparativ e Embodimen t2 | PVDF | 50 | 0 | AB | 95:5 | 3 | Powder piezoelectr ic layer | Surface of negative current collector | 15 | 20 |
| Comparativ e Embodimen t 3 | PVDF | 50 | -100 | AB | 95:5 | 3 | Powder piezoelectr ic layer | Surface of negative current collector | 15 | 26 |
| Comparativ e Embodimen t4 | PVDF | 50 | -10 | AB | 95:5 | 3 | Powder piezoelectr ic layer | Surface of negative current collector | 18 | 20 |
| Comparativ e Embodimen t 5 | PVDF | 50 | -50 | AB | 95:5 | 3 | Powder piezoelectr ic layer | Surface of negative current collector | 16 | 24 |
| Comparativ e Embodimen t 6 | PVDF | 50 | 0 | / | / | 10 | Thin film piezoelectr ic layer | Surface of negative current collector | 16 | 27 |
| Comparativ e Embodimen t 7 | PVDF | 50 | -50 | / | / | 10 | Thin film piezoelectr ic layer | Surface of negative current collector | 12 | 30 |
| Comparativ e Embodimen t 8 | BaTiO₃ | 1 | 0 | SP | 95:5 | 3 | Powder piezoelectr ic layer | Surface of negative current collector | 16 | 18 |
| Comparativ e Embodimen t 9 | BaTiO₃ | 1 | -3 | SP | 95:5 | 3 | Powder piezoelectr ic layer | Surface of negative current collector | 12 | 20 |
| Comparativ e Embodimen t 10 | BaTiO₃ monocryst al sheet | 1 | -3 | / | / | 10 | Thin film piezoelectr ic layer | Surface of negative current collector | 12 | 26 |
| Comparativ e Embodimen t 11 | BaTiO₃ monocryst al sheet | 1 | 0 | / | / | 10 | Thin film piezoelectr ic layer | Surface of negative current collector | 15 | 24 |
| Comparativ e Embodimen t 12 | / | / | / | / | / | / | / | / | 86 | / |

| | | | | | | | | | | |
|---|---|---|---|---|---|---|---|---|---|---|
| Note: "/" in Table 1 indicates that there is no corresponding preparation parameter. | | | | | | | | | | |

As can be seen from Embodiments 1-4, 9-12, 19-22, and 27-30, when lithium metal batteries with the same type of piezoelectric layer are selected, the deposition overpotential and the cycle performance of the batteries vary with the strength of the polarization electric field. After the negative electrode plate is polarized by using the strength and direction of the polarization electric field within the range specified in this application, the deposition overpotential can be effectively reduced, and the cycle performance of the lithium metal battery can be enhanced.

Generally, the thickness of the piezoelectric layer also affects the deposition overpotential and cycle performance of the lithium metal battery. As can be seen from Embodiments 2, 5-7, 10, 13-15, 21, 23-25, 29, and 31-33, when the thickness of the piezoelectric layer falls within the range specified in this application, the lithium metal battery of a low deposition overpotential and excellent cycle performance can be obtained.

As can be seen from Embodiments 1-15, 19-25, 27-33 and Comparative Embodiment 1, the lithium metal battery containing the piezoelectric layer according to this application achieves cycle performance significantly higher than the cycle performance of a lithium metal battery containing no piezoelectric layer. As can be seen from Embodiments 16-18 and Comparative Embodiment 12, when the negative electrode plate further includes a negative material layer, the lithium metal battery containing the piezoelectric layer according to this application also achieves cycle performance significantly higher than the cycle performance of a lithium metal battery containing no piezoelectric layer. The piezoelectric layer disposed in the negative electrode plate and falling within the range specified in this application can significantly improve the cycle performance of the lithium metal battery.

Taking all the above analysis into account, the negative electrode plate according to this application includes a negative current collector and a piezoelectric layer in which a polarization electric field exists. A direction of the polarization electric field is directed from the negative current collector to a surface of a negative electrode. A material of the piezoelectric layer includes at least one of a piezoelectric polymer, piezoelectric ceramic, piezoelectric monocrystal, or an inorganic piezoelectric material. The negative electrode plate can control lithium deposition sites, effectively suppress the growth of lithium dendrites, and significantly improve the cycle performance and safety performance of the lithium metal battery.

The foregoing descriptions are merely preferred embodiments of this application, but are not intended to limit this application. Any modifications, equivalent substitutions, and improvements made within the spirit and principles of this application fall within the protection scope of this application.

## Claims

1. A negative electrode plate, comprising a negative current collector and a piezoelectric layer, wherein a polarization electric field exists on the piezoelectric layer, and a direction of the polarization electric field is directed from the negative current collector to a surface of a negative electrode, and a material of the piezoelectric layer comprises at least one of a piezoelectric polymer, piezoelectric ceramic, piezoelectric monocrystal, or an inorganic piezoelectric material.

2. The negative electrode plate according to claim 1, wherein a room-temperature coercive field strength Ec of the material of the piezoelectric layer satisfies: 0 kV/mm < Ec < 100 kV/mm.

3. The negative electrode plate according to claim 2, wherein a strength of the polarization electric field is 0.1 to 6 times the room-temperature coercive field strength Ec.

4. The negative electrode plate according to claim 1, wherein the piezoelectric polymer comprises polyvinylidene difluoride, a vinylidene difluoride-trifluoroethylene copolymer, a vinylidene difluoride-tetrafluoroethylene copolymer, a vinylidene dicyanide-vinyl acetate copolymer, a vinylidene dicyanide-vinyl benzoate copolymer, a vinylidene dicyanide-vinyl propionate copolymer, a vinylidene dicyanide-vinyl pivalate copolymer, a vinylidene dicyanide-methyl methacrylate copolymer, a vinylidene dicyanide-isobutylene copolymer, or a nylon-odd number piezoelectric polymer -(HN-(CH₂)ₓ-CO-)ₙ-, wherein x is an even number within 2 to 10, and n is a positive integer within 90 to 400; the piezoelectric ceramic comprises at least one of barium titanate, lead titanate, lithium niobate, lithium tantalate, lead zirconate titanate PbZr_{y}Ti_{1-y}O₃, lead magnesium niobate PbMg_{z}Nb_{1-z}O₃, lead zinc niobate PbZnᵥNb₁₋ᵥO₃, or lead manganese antimonate PbMn_{w}Sb_{1-w}O₃ or Pb₁₋ₛMₘ(ZrₜTi₁₋ₜ)_{1-(s/4)}O₃, wherein 0 < y < 1, 0 < z < 1, 0 < v < 1, 0 < w < 1, 0 < s < 1, 0 < m < 1, 0 < t < 1, and M is any one of rare earth elements; the piezoelectric monocrystal comprises quartz monocrystal, tellurium oxide crystal, bismuth germanate monocrystal, lithium iodate monocrystal, aluminum orthophosphate monocrystal, lanthanum gallium silicate monocrystal, barium titanate monocrystal, or lead zirconate titanate monocrystal PbZrₑTi₁₋ₑO₃, wherein, 0 < e < 1; and the inorganic piezoelectric material comprises at least one of zinc oxide, bismuth oxide, cobalt oxide, lead oxide, nickel oxide, chromium oxide, antimony oxide, aluminum nitride, aluminum gallium nitride, indium aluminum nitride, gallium nitride, indium gallium nitride, indium nitride, silicon carbide, or a trititanium aluminum-based or titanium-aluminum-based intermetallic compound.

5. The negative electrode plate according to claim 1, wherein the piezoelectric layer comprises a powder piezoelectric layer, and a thickness of the powder piezoelectric layer is 0.1 µm to 5 µm.

6. The negative electrode plate according to claim 5, wherein the powder piezoelectric layer is formed of a powder piezoelectric material and a conductive material, a mass percent of the powder piezoelectric material is 50% to 100%, and a mass percent of the conductive material is 0% to 50%.

7. The negative electrode plate according to claim 6, wherein the powder piezoelectric material comprises at least one of powder of the piezoelectric polymer, powder of the piezoelectric ceramic, or powder of the piezoelectric monocrystal; and the conductive material comprises at least one of conductive carbon powder or conductive metal powder.

8. The negative electrode plate according to claim 1, wherein the piezoelectric layer comprises a thin film piezoelectric layer, and a thickness of the thin film piezoelectric layer is 5 µm to 200 µm.

9. The negative electrode plate according to claim 8, wherein the thin film piezoelectric layer comprises a thin film piezoelectric material, and the thin film piezoelectric material comprises at least one of a piezoelectric polymer film, a piezoelectric ceramic film, a piezoelectric monocrystal film, or an inorganic piezoelectric material film.

10. The negative electrode plate according to claim 1, wherein the piezoelectric layer is located on a surface of the negative current collector; or located between the negative current collector and a negative material layer, or located on an outer surface of the negative material layer; or the piezoelectric layer is mixed with the negative material layer and located on the surface of the negative current collector.

11. A lithium metal battery, comprising the negative electrode plate according to any one of claims 1 to 10.

12. An electronic device, comprising the lithium metal battery according to claim 11.
